# EUROPEAN PATENT SPECIFICATION

(11) **EP 4 060 229 B1**
(45) Date of publication and mention of the grant of the patent: **07.08.2024**
(21) Application number: 20886201.1
(22) Date of filing: 15.10.2020
(51) Int. Cl.: F22B 3/02, F22B 35/00, C01B 3/00, F24V 30/00, F28D 20/00, F22B 1/02, F22B 1/28

(54) **BOILER**
KESSEL
CHAUDIÈRE

(30) Priority: 15.11.2019 JP 2019207481; 27.07.2020 JP 2020126761
(43) Date of publication of application: 21.09.2022
(73) Proprietor: MIURA CO., LTD., Matsuyama-shi Ehime 799-2696 (JP); Clean Planet Inc., Minato-ku Tokyo 105-0022 (JP)
(72) Inventor: OTANI, Kazuyuki, Matsuyama-shi, Ehime 799-2696 (JP); ISHIZAKI, Nobuyuki, Matsuyama-shi. Ehime 799-2696 (JP); INOUE, Kazunobu, Matsuyama-shi, Ehime 799-2696 (JP); YAMAMOTO, Hidetaka, Matsuyama-shi, Ehime 799-2696 (JP)
(74) Representative: Becker, Eberhard
(86) International application number: PCT/JP2020/038870
(87) International publication number: WO 2021/095430

(56) References cited:
- EP-A1- 3 640 564
- WO-A1-2018/230447
- JP-A- H02 110 263
- JP-A- H05 196 201
- JP-A- H07 279 758
- JP-A- S56 137 089
- JP-A- S62 131 101
- JP-B2- 6 448 074
- US-A1- 2019 257 551

## Description

### TECHNICAL FIELD

The present invention relates to a boiler.

### BACKGROUND ART

Typically, a boiler has been broadly utilized for various purposes including industrial and commercial purposes. In the boiler, a heat generation unit configured to heat supplied fluid such as water or a heat medium is provided, and as one form of the heat generation unit, there is one provided with a heat generation body in a container.

There are various specific forms of the above-described heat generation unit, and as one example thereof, one including, in a container, a heat generation body (a reactant) configured such that multiple metal nanoparticles made of hydrogen storing metal or hydrogen storing alloy are formed on a surface has been disclosed as a heat generation system in Patent Literature 1. According to Patent Literature 1, it has been described that in the heat generation system, hydrogen-based gas contributing to heat generation is supplied into the container to store hydrogen atoms in the metal nanoparticles and excess heat is generated.

Note that as also described in Patent Literature 1, an announcement that the heat generation body produced from palladium is provided in the container and heat generation reaction is made by heating the inside of the container while heavy hydrogen gas is being supplied into the container has been released. Moreover, regarding a heat generation phenomenon that the excess heat (an output enthalpy higher than an input enthalpy) is generated utilizing the hydrogen storing metal or the hydrogen storing alloy, details of the mechanism for generating the excess heat have been discussed among researchers of each country, and it has been reported that the heat generation phenomenon has occurred. Note that as a document regarding the present technical field, there is Patent Literature 2 in addition to Patent Literature 1.

### PRIOR ART LITERATURE

### PATENT LITERATURE

Patent Literature 1: Japanese Patent No. 6448074
Patent Literature 2: U.S. Patent No. 9,182,365

US 2019/257551 A1 relates to a heat generating system which includes a heat-generating element cell and a circulation device. JP S62-131 101 A relates to a steam generator that heats water and generates steam using the heat of a chemical reaction generated when hydrogen gas is stored in a hydrogen-absorbing metal. WO 2018/230447 A1 relates to a heat generating device and a method for generating heat with which excess heat can be generated.

### DISCLOSURE OF THE INVENTION

### PROBLEMS TO BE SOLVED BY THE INVENTION

It is important for the boiler configured to heat fluid by the heat generation unit including the heat generation body in the container to moderately heat fluid according to various situations while heat generated by the heat generation body can be efficiently utilized. For example, in a case where a steam amount (a steam load) required for the boiler from the outside varies, water heating needs to be reduced under a situation where the steam load is relatively low, and needs to be accelerated under a situation where the steam load is relatively high

The present invention has been made in view of the above-described problems. An object of the present invention is to provide a boiler for heating fluid by a heat generation unit including heat generation bodies in a container, the boiler being configured so that fluid can be moderately heated according to various situations while heat generated by the heat generation bodies can be efficiently utilized.

### SOLUTIONS TO THE PROBLEMS

The invention is set out in the appended set of claims. The following disclosure serves a better understanding of the present invention. The boiler according to the present invention is a boiler for heating fluid by using heat generated by a heat generation body, the boiler including the heat generation body and a container having the heat generation body inside and configured such that the inside of the container is filled with gas with higher specific heat than that of air. The boiler includes a controller configured to control a heat generation amount of the heat generation body under a situation where the gas has been supplied into the container. According to the present configuration, fluid is heated by a heat generation unit including the heat generation body in the container, and can be moderately heated according to various situations while heat generated by the heat generation body can be efficiently utilized. More specifically, as the above-described configuration, it may be configured such that the boiler includes, as a path for circulating the gas, a circulation path having, as part thereof, the inside of the container.

More specifically, as the above-described configuration, it may be configured such that the gas is hydrogen-based gas and the heat generation body is a reactant configured such that metal nanoparticles made of hydrogen storing metals are provided on a surface and a hydrogen atom is stored in the metal nanoparticles to generate excess heat. Note that the hydrogen-based gas in the present application is heavy hydrogen gas, light hydrogen gas, or a combination thereof. Moreover, the "hydrogen storing metals" in the present application means hydrogen storing metal such as Pd, Ni, Pt, or Ti or hydrogen storing alloy containing one or more types of these metals.

More specifically, the above-described configuration may include a heater configured to heat the reactant, and the controller may adjust a circulation amount of the gas in the circulation path or the temperature of the heater to control the heat generation amount.

More specifically, as the above-described configuration, in the boiler, steam generated by heating of water as the fluid is supplied to the outside, and the controller controls the heat generation amount based on the pressure of the steam supplied to the outside. According to the present configuration, the heat generation amount of the heat generation body is easily controlled such that the steam pressure reaches an optimal value. More specifically, as the above-described configuration, in the boiler, a heat medium as the fluid may be heated and supplied to the outside, and the controller may control the heat generation amount based on the temperature of the heated heat medium.

More specifically, the above-described configuration may include a heat transfer pipe to be heated by heat generated by the heat generation body, the water being heated by passing through the heat transfer pipe. The heat transfer pipe may be arranged to surround the heat generation body. According to the present configuration, heat generated by the heat generation body can be extremely efficiently transmitted to water targeted for heating.

The above-described configuration may include a heat exchanger configured such that the gas heated by the heat generation body or a heat medium having exchanged heat with the gas passes through a heating side to exchange heat with water as the fluid, and the controller may adjust the heat generation amount of the heat generation body based on the pressure of steam supplied from the heat exchanger to the outside. Moreover, the heat exchanger may be provided on a gas path of the circulation path arranged outside the container.

### EFFECTS OF THE INVENTION

According to the boiler of the present invention, fluid is heated by the heat generation unit including the heat generation body in the container, and the fluid can be moderately heated according to various situations while heat generated by the heat generation body is efficiently usable.

### BRIEF DESCRIPTION OF THE DRAWINGS

Fig. 1 is a schematic configuration diagram of a boiler 1 according to a first embodiment.
Fig. 2 is a view for describing the course of water passing through a heat transfer pipe of the boiler 1.
Fig. 3 is a flowchart regarding operation of a controller according to the first embodiment.
Fig. 4 is a schematic configuration diagram of a boiler 2 according to a second embodiment.
Fig. 5 is a flowchart regarding operation of a controller according to the second embodiment.
Fig. 6 is a schematic configuration diagram of a boiler 3 according to a third embodiment.
Fig. 7 is a schematic configuration diagram of a boiler 4 according to a fourth example not covered by the invention.
Fig. 8 is a schematic configuration diagram of a boiler 5 according to a fifth embodiment.

### DESCRIPTION OF PREFERRED EMBODIMENTS

Hereinafter, a boiler according to each embodiment of the present invention will be described with reference to each drawing.

### 1. First Embodiment

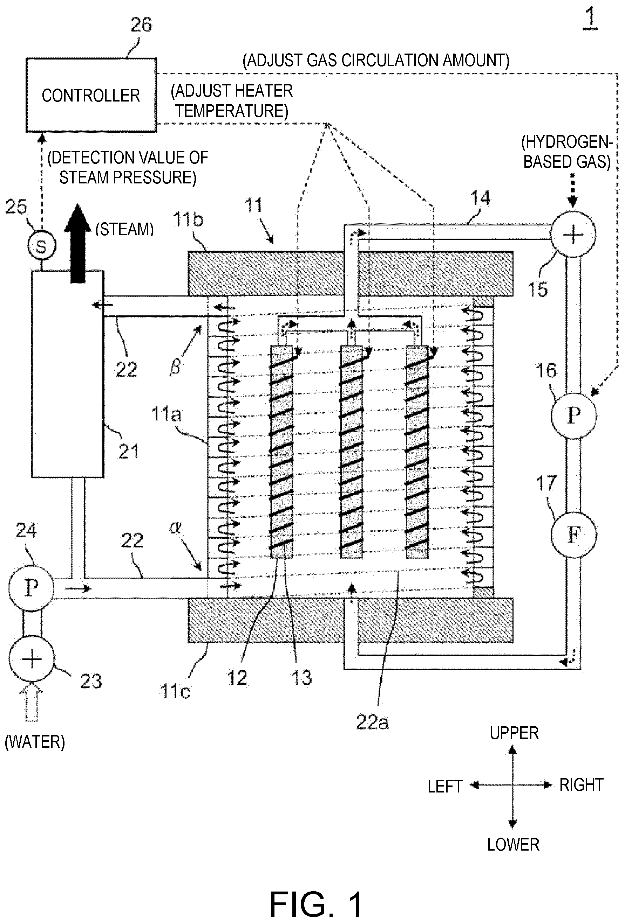

First, a first embodiment of the present invention will be described. Fig. 1 is a schematic configuration diagram of a boiler 1 according to the first embodiment. As illustrated in this figure, the boiler 1 includes a container 11, reactants 12, heaters 13, a gas path 14, a gas receiving portion 15, a gas pump 16, a gas filter 17, a separator 21, a fluid path 22, a water receiving portion 23, a water pump 24, a pressure sensor 25, and a controller 26.

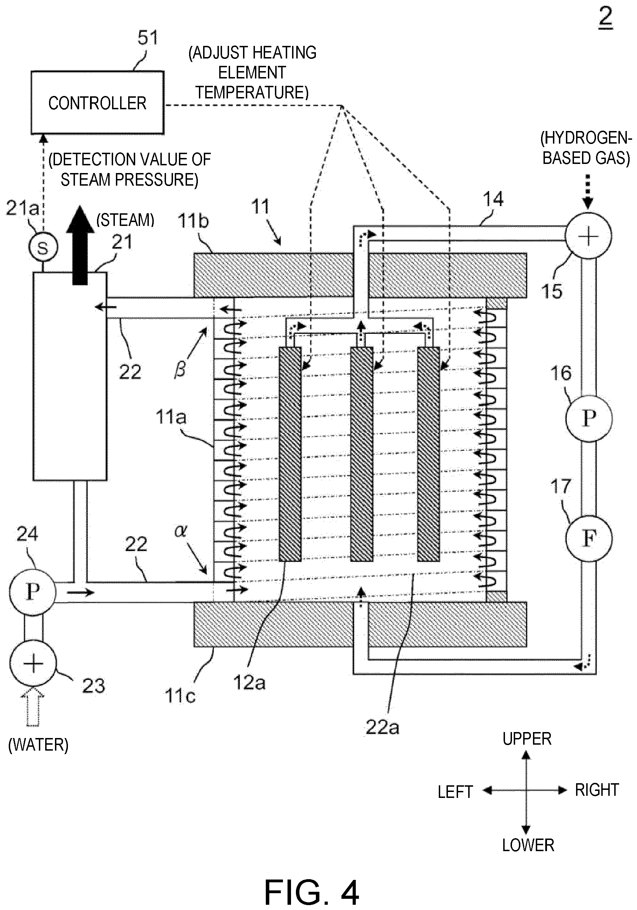

Note that the states of the container 11 and the inside thereof in Fig. 1 (the same also applies to Figs. 4, 6, 7, and 8 as described later) are illustrated as schematic sectional views along a plane cutting the container 11 substantially in half in an upper-lower direction, and upper, lower, right, and left directions (the upper-lower direction is coincident with the vertical direction) are illustrated as in this figure. Moreover, chain lines illustrated in Fig. 1 (the same also applies to Figs. 4, 6, and 7) schematically indicate arrangement of a heat transfer pipe 22a (also referred to as a water pipe).

The container 11 is, as a whole, formed in a cylindrical shape having bottoms at both upper and lower ends in the upper-lower direction as an axial direction, and is formed so that gas can be sealed inside. More specifically, the container 11 has a cylindrical side wall 11a formed by the later-described heat transfer pipe 22a, and the upper side of the side wall 1 1a is closed by an upper bottom portion 11b and the lower side of the side wall 11a is closed by a lower bottom portion 11c. Note that in the present embodiment, the side wall 11a of the container 11 is in the cylindrical shape as one example, but may be formed in other tubular shapes. Alternatively, a can body cover may be placed at the outer periphery of the side wall 11a, and a heat insulating member may be provided between the side wall 11a and the can body cover.

The reactant 12 is configured such that many metal nanoparticles are provided on a surface of a carrier formed in a fine mesh shape as a whole. Hydrogen storing alloys (hydrogen storing metal or hydrogen storing alloy) are applied as the material of this carrier, and the carrier is formed in a cylindrical shape having bottoms at both upper and lower ends in the upper-lower direction as the axial direction. An upper surface of the reactant 12 is connected to the gas path 14 so that gas having flowed into the reactant 12 through mesh-shaped clearances thereof can be delivered into the gas path 14. In the example of the present embodiment, three reactants 12 are provided next to each other in a right-left direction in the container 11.

The heater 13 is spirally wound around a side surface of the reactant 12 formed in the bottomed cylindrical shape, and is formed to generate heat by using supplied power. For example, a ceramic heater may be employed as the heater 13. The heater 13 generates heat to heat the reactant 12 so that the temperature of the reactant 12 can be increased to a predetermined reaction temperature at which reaction for generating later-described excess heat is easily made. Note that the controller 26 controls a power supply to the heater 13 so that the temperature of the heater 13 can be adjusted.

The control of the power supply to the heater 13 by the controller 26 may be performed such that the temperature of the heater 13 approaches a target value. For example, the controller 26 may increase the power supply to the heater 13 in a case where the controller 26 detects the temperature of the heater 13 and such a detection value is lower than the target value, and may decrease the power supply to the heater 13 in a case where the detection value is higher than the target value.

The gas path 14 is provided outside the container 11, and forms a gas circulation path including, as part thereof, the inside of the container 11. One end portion of the gas path 14 is connected to the upper surface of each reactant 12, and the other end portion is connected to the inside of the container 11. More specifically, portions of the gas path 14 connected to the upper surfaces of the reactants 12 are joined together in the container 11, and after having penetrated the upper bottom portion 11b as a single path, further penetrate the lower bottom portion 11c through the gas receiving portion 15, the gas pump 16, and the gas filter 17 and are connected to the inside of the container 11.

The gas receiving portion 15 receives a supply of hydrogen-based gas (heavy hydrogen gas, light hydrogen gas, or a combination thereof) from an external supply source, and causes the supplied hydrogen-based gas to flow into the gas path 14. For example, in a case where the hydrogen-based gas is supplied from a tank storing the hydrogen-based gas in advance to the gas receiving portion 15, such a tank is a hydrogen-based gas supply source.

For example, the rotational speed of the gas pump 16 is controlled by inverter control, and with a flow rate according to this rotational speed, gas in the gas path 14 flows from an upstream side to a downstream side (i.e., to a direction indicated by dashed arrows in Fig. 1). Note that the controller 26 controls the rotational speed of the gas pump 16 so that a gas circulation amount in the gas circulation path including the gas path 14 can be adjusted.

This rotational speed control by the controller 26 may be performed such that the gas circulation amount in the circulation path approaches a target value. For example, the controller 26 may detect such a circulation amount, and may increase the rotational speed of the gas pump 16 to increase the circulation amount in a case where the detection value is lower than the target value and decrease the rotational speed of the gas pump 16 to decrease the circulation amount in a case where the detection value is higher than the target value.

The gas filter 17 removes an impurity (specifically, one as a cause for inhibition of the reaction for generating the excess heat in the reactant 12) contained in gas in the gas path 14. The separator 21 receives steam generated by heating of water (one example of fluid) through the heat transfer pipe 22a (specifically, the water pipe), and performs steam separation (separation of drain contained in such steam) for the steam. The steam separated in the separator 21 can be supplied to the outside of the boiler 1.

The fluid path 22 is a water path connected from the water receiving portion 23 to the separator 21. Part of the fluid path 22 is the heat transfer pipe 22a forming the side wall 11a as described above. Moreover, in the middle of the fluid path 22, the water pump 24 is arranged at a position immediately on the downstream side of the water receiving portion 23. Note that liquid water supplied from the water receiving portion 23 flows in the upstream-side path of the fluid path 22 with respect to the heat transfer pipe 22a, and water (steam) evaporated by heating in the heat transfer pipe 22a flows in the downstream-side path (between the container 11 and the separator 21) with respect to the heat transfer pipe 22a.

The water receiving portion 23 receives, as necessary, a supply of water as a steam source from the outside, and causes the supplied water to flow into the fluid path 22. The water pump 24 causes water in the fluid path 22 to flow from the upstream side to the downstream side (i.e., to a direction indicated by solid arrows in Fig. 1).

The heat transfer pipe 22a spirally extends from the lower bottom portion 11c to the upper bottom portion 11b to form the tubular side wall 1 1a of the container 11. That is, the heat transfer pipe 22a spirally extends in the axial direction (the upper-lower direction) of the tubular side wall 11a such that no clearance is formed between adjacent portions of the heat transfer pipe 22a in the upper-lower direction. Note that in the example of the present embodiment, the sectional shape of an inner wall of the heat transfer pipe 22a is in a rectangular shape, but may be a circular shape or other shapes.

The pressure sensor 25 continuously detects the pressure (hereinafter referred to as a "steam pressure") of steam supplied from the separator 21 to the outside. Note that a detection value (the value of the steam pressure) of the pressure sensor 25 is high under a situation where the amount of steam supplied from the boiler 1 is greater than a steam amount (a steam load) required from the outside, and conversely, is low under a situation where the amount of steam supplied from the boiler 1 is smaller. Information on the detection value of the pressure sensor 25 is continuously transmitted to the controller 26.

The controller 26 includes a computing device and the like, and controls a heat generation amount of the reactant 12 based on the detection value of the pressure sensor 25. Specific operation contents of the controller 26 will be described in detail again.

Next, operation of the boiler 1 will be described. In the boiler 1, the hydrogen-based gas is supplied from the external supply source to the gas receiving portion 15, and the gas circulation path including the inside of the container 11 and the gas path 14 is filled with the hydrogen-based gas. Due to action of the gas pump 16, the charged hydrogen-based gas circulates to the direction indicated by the dashed arrows in Fig. 1 in the circulation path.

At this point, in the container 11, the hydrogen-based gas is delivered into the gas path 14 connected to upper portions of the reactants 12 after having flowed in the reactants 12 through the mesh-shaped clearances thereof. At the same time, the reactants 12 are heated by action of the heaters 13. When the reactants 12 are, as described above, heated by the heaters 13 in a state in which the hydrogen-based gas has been supplied into the container 11, hydrogen atoms are stored in the metal nanoparticles provided on the reactants 12, and the reactants 12 generate an excess heat of equal to or higher than the temperature of heating by the heater 13. As described above, since the reactant 12 makes the reaction for generating the excess heat, the reactant 12 functions as a heat generation body. The principle of the reaction for generating the excess heat is, for example, similar to the principle of reaction for generating excess heat as disclosed in Patent Literature 1.

From the hydrogen-based gas in the circulation path including the inside of the container 11, the impurity is removed when the hydrogen-based gas passes through the gas filter 17. Thus, the high-purity hydrogen-based gas from which the impurity has been removed is continuously supplied into the container 11. With this configuration, the high-purity hydrogen-based gas can be stably provided to the reactants 12, a state in which the output of the excess heat is easily induced can be maintained, and the reactants 12 can effectively generate heat.

In parallel with the operation of generating heat from the reactants 12 as described above, water is supplied from the outside to the water receiving portion 23. The supplied water flows, due to action of the water pump 24, to the direction indicated by the solid arrows in Fig. 1 in the fluid path 22.

When passing through the heat transfer pipe 22a forming the side wall 11a of the container 11, the water flowing in the fluid path 22 is heated by heat generated by the reactants 12. That is, the heat generated by the reactants 12 is transmitted to the heat transfer pipe 22a by convection (heat transfer), heat conduction, and radiation by the hydrogen-based gas in the container 11, and the heat transfer pipe 22a of which temperature has been increased by such transmission heats the water flowing in the heat transfer pipe 22a.

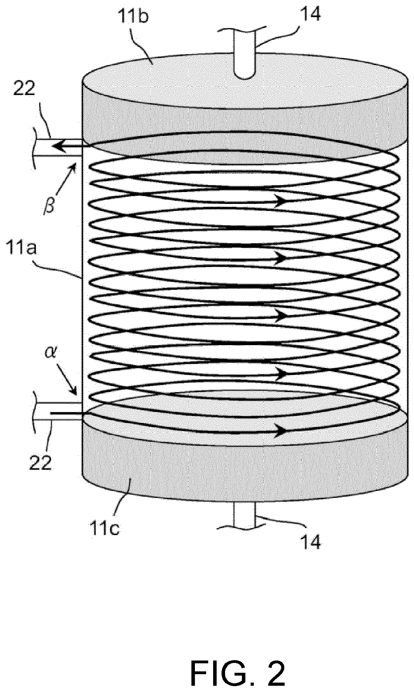

Fig. 2 schematically illustrates the course of water passing through the heat transfer pipe 22a by a solid arrow. As illustrated in this figure, water having entered the heat transfer pipe 22a through an inlet α (the lowermost portion of the heat transfer pipe 22a) of the heat transfer pipe 22a flows along a spirally-extending path in the heat transfer pipe 22a, and is discharged as steam toward the separator 21 through an outlet β (the uppermost portion of the heat transfer pipe 22a) of the heat transfer pipe 22a. At this point, heat from the heat transfer pipe 22a (the side wall 11a of the container) heated by heat generated by the reactants 12 is transmitted to the water passing through the heat transfer pipe 22a, and the temperature of the water increases.

In this manner, the water flowing in the fluid path 22 is heated when passing through the heat transfer pipe 22a, and the temperature thereof increases. Eventually, the water turns into steam. Such steam is delivered to the separator 21, and after the dryness of the steam has been increased by steam separation, is supplied to the outside of the boiler 1.

The amount of steam supplied from the separator 21 to the outside can be, for example, adjusted according to the amount of steam required from the outside. Moreover, in the boiler 1, water is sequentially supplied to the water receiving portion 23 by an amount corresponding to a steam supply to the outside, i.e., a water decrement, and steam can be continuously generated and supplied to the outside.

The amount of heat generation by the reactant 12 as described herein varies according to the temperature of the heater 13 and the hydrogen-based gas circulation amount. That is, as the temperature of the heaters 13 increases, the reaction for generating the excess heat in the reactant 12 is more accelerated, and the heat generation amount of the reactant 12 increases. Moreover, as the hydrogen-based gas circulation amount increases, more hydrogen-based gas in the container 11 acts on the reactant 12, the reaction for generating the excess heat is more accelerated, and the heat generation amount of the reactant 12 increases. Further, as the heat generation amount of the reactant 12 increases, heating of water in the heat transfer pipe 22a is more accelerated to generate more steam, and the steam pressure increases.

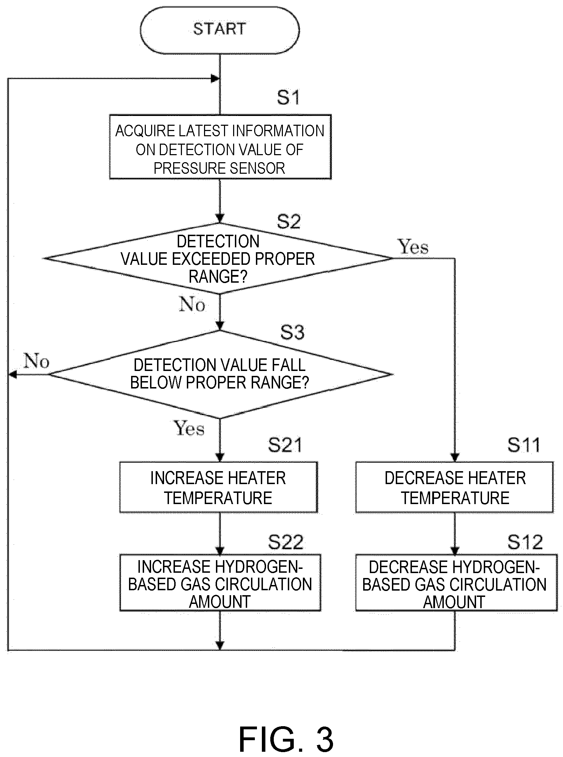

Utilizing this situation, the controller 26 controls the heat generation amount of the reactant 12 such that a proper steam pressure is brought (the detection value of the pressure sensor 25 falls within a preset proper range). A specific example of operation of the controller 26 will be described below with reference to a flowchart illustrated in Fig. 3.

The controller 26 acquires the latest information on the detection value of the pressure sensor 25, and continuously monitors whether or not such a detection value falls within the proper range (steps S1 to S3). This proper range is preferably properly set in advance according to, e.g., the specifications of the boiler 1 and the steam load.

In a case where the detection value exceeds the proper range (Yes at the step S2), the controller 26 adjusts the temperature of the heater 13 to decrease by a predetermined value A1 (a step S11), adjusts the hydrogen-based gas circulation amount to decrease by a predetermined value A2 (a step S12), and returns to operation at the step S1.

Note that each of the above-described values A1, A2 is preferably set so that the heat generation amount of the reactant 12 can be moderately changed. By execution of adjustment at the steps S11 to S12, the heat generation amount of the reactant 12 decreases, and the steam pressure decreases and approaches the proper range.

On the other hand, in a case where the detection value falls below the proper range (Yes at the step S3), the controller 26 adjusts the temperature of the heater 13 to increase by a predetermined value B1 (a step S21), adjusts the hydrogen-based gas circulation amount to increase by a predetermined value B2 (a step S22), and returns to operation at the step S1.

Note that each of the above-described values B1, B2 is preferably set so that the heat generation amount of the reactant 12 can be moderately changed. By execution of adjustment at the steps S21 to S22, the heat generation amount of the reactant 12 increases, and the steam pressure increases and approaches the proper range. By execution of a series of operation illustrated in Fig. 3, the heat generation amount of the reactant 12 can be controlled such that the steam pressure becomes proper.

Adjustment (adjustment of the temperature of the heater 13) at the steps S11, S21 can be implemented in such a manner that a power supply to the heater 13 is changed as necessary. Moreover, adjustment (adjustment of the hydrogen-based gas circulation amount) at the steps S12, S22 can be implemented in such a manner that the rotational speed of the gas pump 16 is changed as necessary.

Moreover, in a series of operation illustrated in Fig. 3, both items of the temperature of the heater 13 and the hydrogen-based gas circulation amount are adjusted according to the detection value of the pressure sensor 25. With this configuration, the heat generation amount of the reactant 12 can be controlled while both items are changed with favorable balance. Note that according to various situations, only either one of the items may be adjusted instead of adjusting both items as described above. As necessary, which one of these items is to be adjusted can be set.

Further, an acceptable range may be provided for the value of each of the above-described items, and operation of the controller 26 may be executed without deviating from this acceptable range. For example, under a situation where the temperature of the heater 13 has already reached the upper limit of the acceptable range, even in a case where the detection value of the pressure sensor 25 falls below the proper range (Yes at the step S3), adjustment (the step S21) for increasing the temperature of the heaters 13 may be omitted, and only adjustment (the step S22) for increasing the hydrogen-based gas circulation amount may be performed. With this configuration, an adverse effect (e.g., failure of the heater 13) due to an excessive increase in the temperature of the heater 13 can be prevented in advance.

### 2. Second Embodiment

Next, a second embodiment of the present invention will be described. Note that the second embodiment is basically similar to the first embodiment, except for the form of a heat generation body and points relating thereto. In description below, description of contents different from those of the first embodiment will be focused, and description of contents common to the first embodiment might be omitted.

Fig. 4 is a schematic configuration diagram of a boiler 2 in the second embodiment. The reactant 12 is, as the heat generation body, employed in the boiler 1 of the first embodiment. Instead, a general heat generation element 12a is employed in the second embodiment. Note that the heat generation element 12a described herein is, as one example, a halogen heater configured to generate heat by a power supply. Moreover, for the sake of convenience, the shape and dimensions of the heat generation element 12a are similar to those of the reactant 12. In a case where the heat generation element 12a is applied as the heat generation body, excess heat is not necessarily generated as in the first embodiment, and one equivalent to a heater 13 is not necessary and placement thereof is omitted.

In the boiler 2, a heat transfer pipe 22a is heated by heat generated from the heat generation elements 12a instead of the reactants 12, and the heat from the heat transfer pipe 22a (a side wall 11a of a container) is transmitted to water passing through the heat transfer pipe 22a, and the temperature of the water increases. Moreover, in this form, the above-described reaction for generating the excess heat is not necessary, and the temperature of the heat generation element 12a is directly controlled by power control so that water can be moderately heated to generate steam.

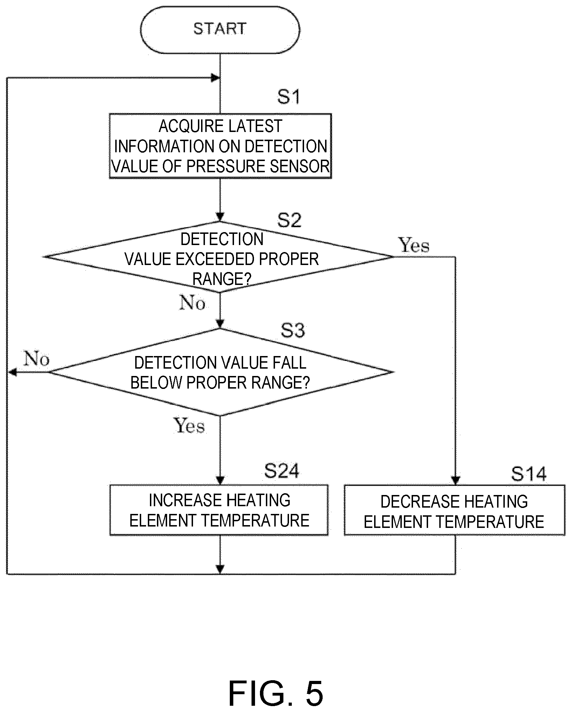

Moreover, in the boiler 2, a controller 26 adjusts the power supply to the heat generation element 12a so that a heat generation amount of the heat generation element 12a (the heat generation body) can be controlled. A specific example of operation of the controller 26 in the second embodiment will be described below with reference to a flowchart illustrated in Fig. 5.

The controller 26 acquires the latest information on a detection value of a pressure sensor 25, and continuously monitors whether or not such a detection value falls within a proper range (steps S1 to S3). This proper range is preferably properly set in advance according to, e.g., the specifications of the boiler 2 and a steam load.

In a case where the detection value exceeds the proper range (Yes at the step S2), the controller 26 adjusts the temperature of the heat generation element 12a to decrease by a predetermined value A4 (a step S14), and returns to operation at the step S1. Note that the above-described value A4 is preferably set so that the heat generation amount of the heat generation element 12a can be moderately changed. By execution of adjustment at the step S14, the heat generation amount of the heat generation element 12a decreases, and the steam pressure decreases and approaches the proper range.

On the other hand, in a case where the detection value falls below the proper range (Yes at the step S3), the controller 26 adjusts the temperature of the heat generation element 12a to increase by a predetermined value B4 (a step S24), and returns to operation at the step S1. Note that the above-described value B4 is preferably set so that the heat generation amount of the heat generation element 12a can be moderately changed. By execution of adjustment at the step S24, the heat generation amount of the heat generation element 12a increases, and the steam pressure increases and approaches the proper range. By execution of a series of operation illustrated in Fig. 5, the heat generation amount of the heat generation element 12a can be controlled such that the steam pressure reaches a proper value.

The boiler 1, 2 of each embodiment described above includes the heat generation bodies and the container 11 having the heat generation bodies inside, and is configured to heat supplied water to generate steam. Further, each boiler 1, 2 includes the heat transfer pipe 22a to be heated by heat generated by the heat generation bodies under environment where the inside of the container 11 is filled with gas (the hydrogen-based gas in the examples of the present embodiments) with higher specific heat than that of air, and water (water as the steam source) passing through the heat transfer pipe 22a is heated. Note that under, e.g., a condition of 1 atm at 200°C, the specific heat of air is about 1,026 J/Kg°C, and on the other hand, the specific heat of hydrogen is about 14,528 J/Kg°C and is extremely higher than the specific heat of air. Moreover, as the heat generation body, the reactant 12 is employed in the boiler 1, and the heat generation element 12a is employed in the boiler 2.

According to each boiler 1, 2, heat generated by the heat generation bodies can be efficiently transmitted to water while such water is heated by a heat generation unit including the heat generation bodies in the container 11 to generate steam. As a result, the heat generated by the heat generation bodies can be efficiently transmitted to the water as the steam source.

Further, the inside of the container 11 is filled with gas with higher specific heat than that of air, and therefore, heat transfer can be favorably performed as compared to the case of charging general air, and heat generated by the heat generation bodies can be efficiently transmitted to water as the steam source. Moreover, due to high specific heat, it is less likely to fluctuate the temperature of gas, and heat can be more stably transmitted to water.

Moreover, the heat transfer pipe 22a forms the entire periphery of the side wall 11a formed in the tubular shape, and therefore, heat generated by the heat generation bodies can be efficiently transmitted to water as the steam source. Specifically, the heat transfer pipe 22a in the present embodiment is arranged to surround the heat generation bodies, and therefore, the substantially entire area of the periphery of the side wall 11a can be covered and heat generated by the heat generation bodies can be transmitted to water as the steam source with as least waste as possible. Note that in each embodiment described above, the heat transfer pipe is arranged to spirally extend to surround the heat generation bodies, but the form surrounding the heat generation bodies is not limited to above. For example, a form in which multiple heat transfer pipes (water pipes) extending in the vertical direction are arranged to surround heat generation bodies may be employed. In this case, an upper header and a lower header are each provided on upper and lower end sides of the multiple heat transfer pipes. The upper header collects steam from the multiple heat transfer pipes, and such steam is supplied from the upper header with or without a separator. The lower header receives supplied water, and communicates with the multiple heat transfer pipes. In this form, the steam pressure is measured using the internal pressure of the upper header, or is measured using the internal pressure of the separator if the separator is placed.

Moreover, in each of the above-described embodiments, the side wall 11a for sealing gas in the container 11 is formed by the heat transfer pipe 22a. Instead, the side wall 11a may be provided separately from the heat transfer pipe 22a, and the heat transfer pipe 22a may be provided inside the side wall 11a (i.e., in the container 11). In this case, under environment where the inside of the container 11 is filled with gas with higher specific heat than that of air, the heat transfer pipe 22a can be also heated by heat generated by the heat generation bodies. Moreover, in this case, the heat transfer pipe 22a does not necessarily fulfill a function as the side wall 11a, but preferably fulfills such a function because the heat transfer pipe 22a more easily receives heat from the heat generation bodies when there is a clearance between adjacent portions of the heat transfer pipe 22a in the upper-lower direction.

In each boiler 1, 2, the above-described gas circulates in the gas circulation path including, as part thereof, the inside of the container 11. With this configuration, the effect of accelerating gas motion in the container 11 and more effectively performing heat transfer from the gas to the side wall 11a is expected. Note that in the boiler 2 of the second embodiment not requiring the reaction for generating the excess heat, a mechanism configured to circulate gas in the container 11 may be omitted, and instead, a mechanism configured to supply gas into the container 11 to fill the container 11 with the gas may be provided. Moreover, the reaction for generating the excess heat is not necessary in the boiler 2, and therefore, gas other than the hydrogen-based gas may be employed as the above-described gas with higher specific heat than that of air.

Moreover, each boiler 1, 2 includes the controller 26 configured to control the heat generation amount of the heat generation body, and therefore, water can be moderately heated according to various situations. Specifically, in each of the above-described embodiments, the heat generation amount is controlled based on the steam pressure (the pressure of steam supplied to the outside), and therefore, is easily controlled such that the steam pressure is adjusted to a proper value. Note that the control of the heat generation amount of the heat generation body according to the present invention is not limited to the control based on the steam pressure, but may be control based on various other types of information.

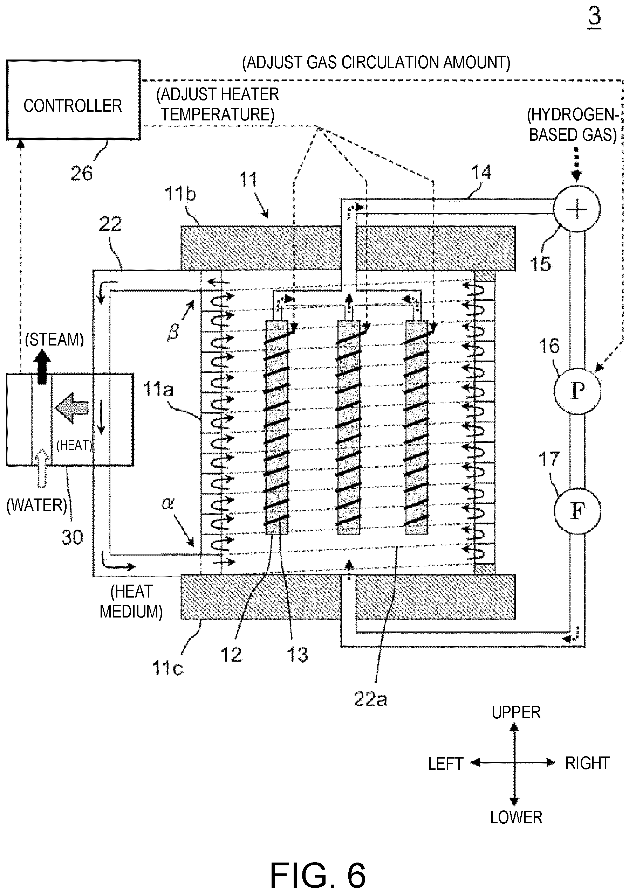

Note that in each embodiment described above, water as the steam source flows in the fluid path 22 including the heat transfer pipe 22a. Instead, a heat medium (fluid for a heat medium) may flow in the fluid path 22 so that water as the steam source can be heated using this heat medium. A schematic configuration diagram of a boiler configured as described above is illustrated as an example in Fig. 6.

### 3. Third Embodiment

In a boiler 3 illustrated in Fig. 6, a heat exchanger 30 is provided instead of the separator 21 of the boiler 1, 2. Part of a fluid path 22 in which a heat medium (one example of fluid) flows is arranged in the heat exchanger 30, and water as a steam source is supplied to the heat exchanger 30. Note that as indicated by solid arrows in this figure, the heat medium circulates in the fluid path 22 including a heat transfer pipe 22a. With this configuration, the heat medium heated by reactants 12 (heat generation bodies) can be delivered to the heat exchanger 30, supplied water can be heated by the heat medium to generate steam, and the steam can be supplied to the outside. Note that the heat exchanger 30 may be configured to generate hot water in addition to the configuration for generating steam by water heating.

For example, a plate or shell-and-tube heat exchanger may be employed as the heat exchanger 30, or various forms of steam generators may be employed. As one example of these steam generators, there is one having a storage space for storing supplied water and a tubular body arranged in the storage space such that a heat medium passes through the tubular body and configured such that heat of the heat medium is transmitted to the stored water through the tubular body. In the boiler 3 illustrated in Fig. 6, a controller 26 may control, as in the case of the first embodiment, a heat generation amount of the heat generation body based on a steam pressure detected by the heat exchanger 30.

The boiler according to the present invention may be a heat medium boiler. In this case, a heat generation amount of a heat generation body may be controlled based on the temperature of a heat medium. One example of the boiler configured as described above will be described below as a boiler 4 according to a fourth embodiment.

### 4. Fourth Example

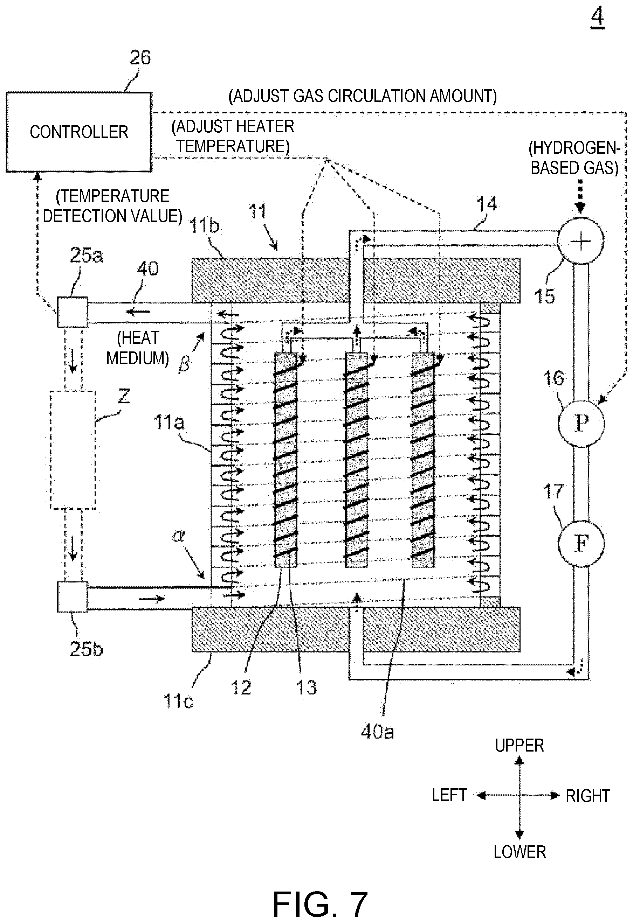

Next, a fourth example not covered by the invention will be described. Note that in description below, description of contents different from those of the first embodiment will be focused, and description of contents common to the first embodiment might be omitted. Fig. 7 is a schematic configuration diagram of the boiler 4 in the fourth example. The boiler 4 is configured as a heat medium boiler configured to supply a heat medium (one example of fluid) to a load Z, and instead of each portion 21 to 25 relating to a water supply or steam generation in the first embodiment, includes a heat medium path 40 in which the heat medium flows. Note that the heat medium path 40 includes a heat transfer pipe 40a having the same configuration as that of the heat transfer pipe 22a of the first embodiment and configured so that the heat medium can flow in the heat transfer pipe 40a, and the heat transfer pipe 40a spirally extends from a lower bottom portion 11c to an upper bottom portion 11b of a container 11.

The heat medium path 40 includes a heat medium outlet 25a arranged on a downstream side with respect to the heat transfer pipe 40a and a heat medium inlet 25b arranged on an upstream side with respect to the heat transfer pipe 40a, and the load Z can be connected to between the heat medium outlet 25a and the heat medium inlet 25b. Note that as the load Z, various devices utilizing heat of the heat medium can be employed, for example. The heat medium having flowed out of the heat medium outlet 25a passes through the load Z, and thereafter, flows into the heat medium inlet 25b. With this configuration, the heat medium can circulate, in the boiler 4 connected to the load Z, in a circulation path including the heat medium path 40 and the load Z as indicated by solid arrows in Fig. 7, and heat generated by reactants 12 (heat generation bodies) can be continuously supplied to the load Z.

Moreover, in the boiler 4, a controller 26 can control a heat generation amount of the reactant 12 based on a detection value of the temperature of the heat medium obtained by, e.g., a temperature sensor. In the example of the present example, the temperature (the outlet temperature of the heat medium) of the heat medium at the heat medium outlet 25a is detected, and based on such a temperature, the controller 26 controls the heat generation amount of the reactant 12.

More specifically, the controller 26 acquires, instead of operation (see Fig. 3) at the steps S1 to S3 in the first embodiment, the latest information on the detection value of the temperature of the heat medium, and continuously monitors whether or not such a detection value falls within a proper range. This proper range is preferably properly set in advance according to, e.g., the specifications of the boiler 4 and the load Z. In the present example, when the temperature of the heat medium exceeds the proper range, the temperature of a heater 13 is decreased, and a hydrogen-based gas circulation amount is decreased. Conversely, when the temperature falls below the proper range, the temperature of the heater 13 is increased, and the hydrogen-based gas circulation amount is increased. In this manner, the heat generation amount of the reactant 12 can be controlled such that the temperature of the heat medium reaches a proper value.

Note that the specific form for controlling the heat generation amount of the reactant 12 based on the temperature of the heat medium is not limited to one described above. As one example, the temperature (a return port temperature of the heat medium) of the heat medium at the heat medium inlet 25b may be detected, and based on such a temperature, the controller 26 may control the heat generation amount of the reactant 12. As another example, the controller 26 may control the heat generation amount of the reactant 12 based on a difference between the temperature of the heat medium at the heat medium outlet 25a and the temperature of the heat medium at the heat medium inlet 25b.

### 5. Fifth Embodiment

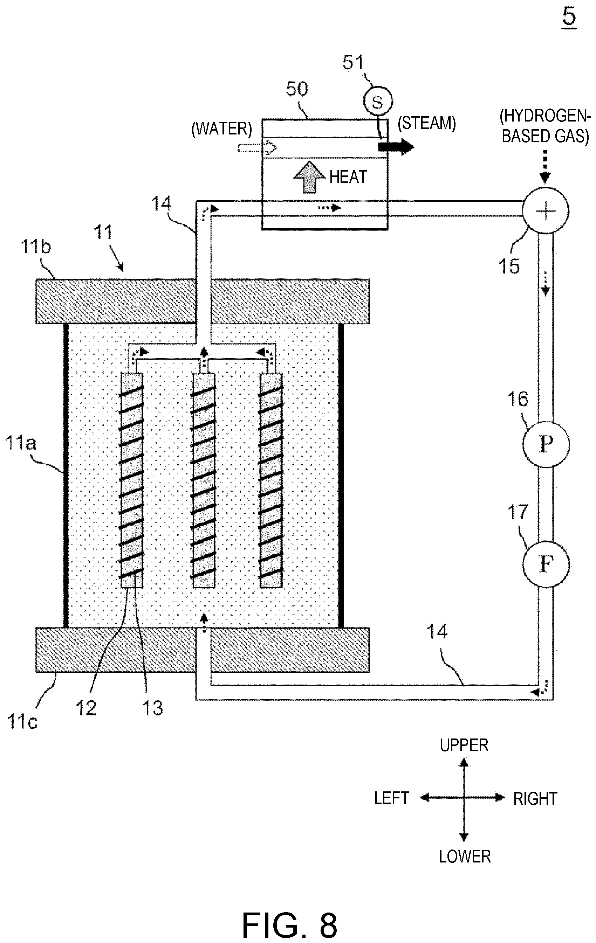

Next, a fifth embodiment of the present invention will be described. Note that in description below, description of contents different from those of the first embodiment will be focused, and description of contents common to the first embodiment might be omitted. Fig. 8 is a schematic configuration diagram of a boiler 5 according to the fifth embodiment. Unlike the boiler 1 of the first embodiment, the boiler 5 includes no fluid path 22 (including a heat transfer pipe 22a). Moreover, a heat exchanger 50 is provided on a gas path 14 of the boiler 5, and it is configured such that steam is generated by heat exchange between gas flowing in the gas path 14 and water supplied to the heat exchanger 50.

As illustrated in Fig. 8, the boiler 5 includes, for example, a container 11, reactants 12, heaters 13, the gas path 14, a gas receiving portion 15, a gas pump 16, a gas filter 17, the heat exchanger 50, and a pressure sensor 51. The container 11 has a cylindrical side wall 11a, and the upper side of the side wall 11a is closed by an upper bottom portion 11b and the lower side of the side wall 11a is closed by a lower bottom portion 11c. Note that in the present embodiment, the side wall 11a of the container 11 is in the cylindrical shape as one example, but may be formed in other tubular shapes. Alternatively, a can body cover may be placed at the outer periphery of the side wall 11a, and a heat insulating member may be provided between the side wall 11a and the can body cover.

The heat exchanger 50 is configured such that part (an upstream-side portion with respect to the gas receiving portion 15) of the gas path 14 is arranged in the heat exchanger 50 and water as a steam source is supplied to the heat exchanger 50. With this configuration, the heat exchanger 50 performs heat exchange between gas in the gas path 14 and supplied water so that the water can be heated to generate steam and the steam can be supplied to the outside of the boiler 5. Note that the heat exchanger 50 of the present embodiment has specifications for heating water to generate steam. Instead, one with specifications for heating water to generate hot water may be employed.

For example, a plate or shell-and-tube heat exchanger may be employed as the heat exchanger 50, or various forms of steam generators may be employed. As one example of these steam generators, there is one having a storage space for storing supplied water and a gas path 14 arranged in the storage space and configured to transmit heat of gas in the gas path 14 to the stored water.

The pressure sensor 51 continuously detects the pressure (a steam pressure) of steam supplied from the heat exchanger 50 to the outside. Note that a detection value (the value of the steam pressure) of the pressure sensor 51 is great under a situation where the amount of steam supplied from the heat exchanger 50 is greater than a steam amount (a steam load) required from the outside, and conversely, is small under a situation where the amount of steam supplied from the heat exchanger 50 is smaller.

In the boiler 5, the amount of steam supplied from the heat exchanger 50 to the outside may be adjustable based on information on the detection value of the pressure sensor 51. Such adjustment can be implemented in such a manner that a steam generation amount is increased by an increase in a heat generation amount of the reactant 12 when the detection value of the pressure sensor 51 is smaller than a proper value and is decreased by a decrease in the heat generation amount of the reactant 12 when the detection value of the pressure sensor 51 is greater than the proper value.

Note that the heat generation amount of the reactant 12 can be controlled by adjustment of the temperature of the heater 13 or the above-described gas circulation amount. As the temperature of the heater 13 increases or the circulation amount increases, the heat generation amount of the reactant 12 can be increased. Moreover, in the heat exchanger 50, water is sequentially supplied by an amount corresponding to a steam supply to the outside, i.e., a water decrement, and therefore, steam can be continuously generated and supplied to the outside.

As described above, the boiler 5 includes the reactants 12, the container 11 having the reactants 12 inside and configured so that the inside of the container 11 can be filled with gas (hydrogen-based gas) with higher specific heat than that of air, the circulation path including the container 11 and the gas path 14 as a path for circulating the hydrogen-based gas, and the heat exchanger 50 configured to heat water by heat exchange with the hydrogen-based gas in the gas path 14 to generate steam. Thus, according to the boiler 5, heat held by circulating gas can be efficiently utilized for heating water, and such heat can be more effectively utilized.

Further, the temperature of gas in the gas path 14 decreases by way of the heat exchanger 50, and accordingly, the temperature of gas when the gas passes through a device (in the example of the present embodiment, the gas pump 16 or the gas filter 17) arranged on a downstream side with respect to the heat exchanger 50 can be decreased. Thus, a heatproof temperature (a required heatproof temperature) required for such a device can be also decreased.

The boiler according to the present invention is also applicable to a hot water boiler, a heat medium boiler, and the like in addition to the boiler generating steam as in the above-described embodiments. The technical scope of the present invention is not determined by description of the above-described embodiments, but is determined by the claims.

### INDUSTRIAL APPLICABILITY

The present invention can be utilized for boilers for various purposes.

### LIST OF REFERENCE NUMERALS

- 1, 2, 3, 4, 5: Boiler
- 11: Container
- 11a: Side Wall
- 11b: Upper Bottom Portion
- 11c: Lower Bottom Portion
- 12: Reactant
- 12a: Heat Generation Element
- 13: Heater
- 14: Gas Path
- 15: Gas Receiving Portion
- 16: Gas Pump
- 17: Gas Filter
- 21: Separator
- 22: Fluid Path
- 22a: Heat Transfer Pipe
- 23: Water Receiving Portion
- 24: Water Pump
- 25: Pressure Sensor
- 25a: Heat Medium Outlet
- 25b: Heat Medium Inlet
- 26: Controller
- 30: Heat Exchanger
- 40: Heat Medium Path
- 40a: Heat Transfer Pipe
- 50: Heat Exchanger
- 51: Pressure Sensor

## Claims

1. A boiler (1, 2, 3, 5) including
a heat generation body (12) and
a container (11) having the heat generation body (12) therein and configured fillable with gas with higher specific heat than that of air,
the boiler (1, 2, 3, 5) heating water by means of heat generated by the heat generation body (12), comprising:
a controller (26) configured to control a heat generation amount of the heat generation body (12) under a situation where the gas is supplied into the container (11),
wherein steam generated by heating of the water is supplied to the outside, the boiler (1, 2, 3, 5) being **characterized in that**
the controller (26) is configured to control the heat generation amount based on a pressure of the steam supplied to the outside.

2. The boiler (1, 2, 3, 5) according to claim 1, wherein
the gas is hydrogen-based gas, and
the heat generation body (12) is a reactant (12) configured such that
metal nanoparticles made of hydrogen storing metals are provided on a surface, and
a hydrogen atom is stored in the metal nanoparticles to generate excess heat.

3. The boiler (1, 2, 3, 5) according to claim 2, further comprising:
a heater (13) configured to heat the reactant (12),
wherein the controller (26) adjusts a temperature of the heater (13) to control the heat generation amount.

4. The boiler (1, 2, 3, 5) according to any one of claims 1 to 3, further comprising:
a heat transfer pipe (22a) to be heated by heat generated by the heat generation body (12), the water being heated by passing through the heat transfer pipe (22a),
wherein the heat transfer pipe (22a) is arranged to surround the heat generation body (12).

5. The boiler (1, 2, 3, 5) according to claim 1, further comprising:
a heat exchanger (30, 50) configured such that the gas heated by the heat generation body (12) or a heat medium having exchanged heat with the gas passes through a heating side to exchange heat with the water,
wherein the controller (26) adjusts the heat generation amount of the heat generation body (12) based on the pressure of the steam supplied from the heat exchanger (30, 50) to the outside.

## Patentansprüche

1. Kessel (1, 2, 3, 5), aufweisend:
einen Wärmeerzeugungskörper (12); und
einen Behälter (11), der im Inneren den Wärmeerzeugungskörper (12) enthält und konfiguriert ist, dass er mit einem Gas befüllbar ist, dessen spezifische Wärme größer als die von Luft ist,
wobei der Kessel (1, 2, 3, 5) Wasser mittels Wärme erwärmt, erzeugt durch den Wärmeerzeugungskörper (12), ferner umfassend:
eine Steuervorrichtung (26), die konfiguriert ist, dass sie die Wärmeerzeugungsmenge des Wärmeerzeugungskörpers (12) steuert, in einer Situation, wenn das Gas dem Behälter (11) zugeführt wird,
wobei der Dampf, erzeugt durch Erwärmen von Wasser, nach außen abgeführt wird, wobei der Kessel (1, 2, 3, 5) **dadurch gekennzeichnet, dass**
die Steuervorrichtung (26) konfiguriert ist, dass sie die Wärmeerzeugungsmenge basierend auf einem Druck des Dampfes steuert, der nach außen abgeführt wird.

2. Kessel (1, 2, 3, 5) nach Anspruch 1, wobei das Gas wasserstoffbasiert ist und
der Wärmeerzeugungskörper (12) ein Reaktant (12) ist, der konfiguriert ist, dass
Metallnanopartikel aus wasserstoffspeicherndem Metall auf einer Oberfläche bereitgestellt sind und
ein Wasserstoffatom in dem Metallnanopartikel gespeichert ist, um überschüssige Wärme zu erzeugen.

3. Kessel (1, 2, 3, 5) nach Anspruch 2, ferner umfassend:
ein Heizgerät (13), das konfiguriert ist, dass es den Reaktanten (12) erwärmt,
wobei die Steuervorrichtung (26) eine Temperatur des Heizgeräts (13) einstellt, um die Wärmeerzeugungsmenge zu steuern.

4. Kessel (1, 2, 3, 5) nach einem der Ansprüche 1 zu 3, ferner umfassend:
ein Wärmeübertragungsrohr (22a), das durch Wärme erwärmt werden soll, erzeugt von dem Wärmeerzeugungskörper (12), wobei das Wasser durch Durchlaufen des Wärmeübertragungsrohrs (22a) erwärmt wird,
wobei das Wärmeübertragungsrohr (22a) angeordnet ist, dass es den Wärmeerzeugungskörper (12) umgibt.

5. Kessel (1, 2, 3, 5) nach Anspruch 1, ferner umfassend:
einen Wärmetauscher (30, 50), der konfiguriert ist, so dass das Gas, das durch den Wärmeerzeugungskörper (12) oder einen Wärmeträger, der ausgetauschte Wärme mit dem Gas enthält, durch eine Heizseite durchläuft, um Wärme mit dem Wasser auszutauschen,
wobei die Steuervorrichtung (26) die Wärmeerzeugungsmenge des Wärmeerzeugungskörpers (12) basierend auf dem Druck des Dampfes steuert, der von dem Wärmetauscher (30, 50) nach außen abgeführt wird.

## Revendications

1. Chaudière (1, 2, 3, 5) comprenant :
un corps de génération de chaleur (12) et
un conteneur (11) contenant le corps de génération de chaleur (12) à l'intérieur et configuré pour être chargé d'un gaz à une chaleur spécifique plus élevée que de l'air,
dans lequel la chaudière (1, 2, 3, 5) chauffe l'eau au moyen de la chaleur générée par le corps de génération de chaleur (12), comprenant :
un contrôleur (26) configuré pour contrôler une quantité de génération de chaleur du corps de génération de chaleur (12), dans une situation où le gaz est fourni au conteneur (11),
dans lequel une vapeur générée par l'échauffement de l'eau est évacuée vers à l'extérieur, la chaudière (1, 2, 3, 5) étant **caractérisé en ce que**
le contrôleur (26) est configuré pour contrôler la quantité de génération de chaleur sur la base d'une pression de la vapeur qui est évacuée vers l'extérieur

2. Chaudière (1, 2, 3, 5) selon la revendication 1, dans laquelle
le gaz est un gaz à base d'hydrogène, et
le corps de génération de chaleur (12) est un réactif (12) configuré pour que
des nanoparticules métalliques de métal stockant l'hydrogène sont fournies sur une surface, et que
d'un atome d'hydrogène est stocké dans les nanoparticules métalliques pour générer un excès de chaleur.

3. Chaudière (1, 2, 3, 5) selon la revendication 2, comprenant en outre :
un dispositif de chauffage (13) configuré pour chauffer le réactif (12),
dans lequel le contrôleur (26) ajuste une température du dispositif de chauffage (13) pour régler la quantité de génération de chaleur.

4. Chaudière (1, 2, 3, 5) selon l'une des revendications 1 à 3, comprenant en outre :
un tuyau de transfert de chaleur (22a) chauffé par la chaleur générée par le corps de génération de chaleur (12), dans lequel l'eau est chauffée en passant par le tuyau de transfert de chaleur (22a),
dans lequel le tuyau de transfert de chaleur (22a) étant disposé de manière à entourer le corps de génération de chaleur (12).

5. Chaudière (1, 2, 3, 5) selon la revendication 1, comprenant en outre :
un échangeur de chaleur (30, 50) configuré pour que le gaz chauffé par le corps de génération de chaleur (12) ou un fluide caloporteur contenant de la chaleur échangée avec le gaz passe par le côté chauffage pour échanger de la chaleur avec l'eau,
dans lequel le contrôleur (26) ajuste la quantité de génération de chaleur du corps de génération de chaleur (12) sur la base de la pression de la vapeur qui est évacuée vers l'extérieur par l'échangeur de chaleur (30, 50).
